# EUROPEAN PATENT APPLICATION

(11) **EP 3 531 078 A1**
(43) Date of publication of application: **28.08.2019**
(21) Application number: 18157826.1
(22) Date of filing: 21.02.2018
(51) Int. Cl.: G01D 5/353, B61L 23/00, G01H 9/00

(54) **EVALUATION UNIT, TRACKING SYSTEM AND METHOD FOR EVALUATING A DIGITAL SIGNAL**

(71) Applicant: Frauscher Sensortechnik GmbH, 4774 St. Marienkirchen (AT)
(72) Inventor: Rosenberger, Martin, 4773 Eggerding (AT)
(74) Representative: Epping - Hermann - Fischer

(57) **Abstract**

An evaluation unit (20) for the evaluation of digital signals comprises a connection to a digital data output (21) of a distributed sensor (22) for position sensing, and a comparator unit (23) which is configured to receive a digital data signal (DS) provided by the distributed sensor (22), to compare the digital data signal (DS) with at least one predefined pattern and to provide a digital output signal (OS). The digital data signal (DS) comprises position information, and the digital output signal (OS) depends on the predefined pattern and on the digital data signal (DS). Furthermore, a tracking system (27) for tracking rail vehicles (26) and a method for evaluating a digital signal are provided.

## Description

The present application relates to an evaluation unit for the evaluation of digital signals, a tracking system for tracking rail vehicles and a method for evaluating a digital signal.

Distributed acoustic sensors can be employed to monitor sound waves in the vicinity of the distributed acoustic sensor. The distributed sensor can extend over long distances, for example along railway tracks. Therefore, sound waves can be detected along a long distance. For this purpose the distributed acoustic sensor can comprise an optical fibre. A laser pulse is sent through the optical fibre and the backscattered signal provides information about sound waves in the vicinity of the optical fibre as the structure of the fibre is changed physically by sound waves.

For a good temporal and spatial resolution along the optical fibre, it is necessary to measure the backscattered signal at several positions and with a high repetition rate. Consequently, a high rate of data is to be transmitted to a tracking unit which analyses the detected data. However, for some networks the data rate might be too high such that the detected data cannot be transmitted instantaneously.

It is an objective to provide an evaluation unit for the evaluation of digital signals which is configured to transmit data efficiently. It is further an objective to provide a tracking system which is configured to transmit data efficiently. It is further an objective to provide a method for evaluating a digital signal in an efficient way.

These objectives are achieved with the independent claims. Further embodiments are the subject of dependent claims.

In at least one embodiment of the evaluation unit for the evaluation of digital signals, the evaluation unit comprises a connection to a digital data output of a distributed sensor for position sensing. The distributed sensor can have a sensor length. The distributed sensor can be configured to provide position information along the sensor length. This can mean, that the distributed sensor can provide the position of an object along the length of the distributed sensor. The distributed sensor can be a linear sensor. Furthermore, the distributed sensor can be arranged along or close to a facility which is to be monitored. A facility to be monitored can for example be a railway track where rail vehicles are the objects to be detected. It is further possible that a facility to be monitored is a pipeline, road, fence or other assets. Thus, the sensor length can be in the range of several kilometers or several hundreds of kilometers.

The evaluation unit further comprises a comparator unit which is configured to receive a digital data signal provided by the distributed sensor, to compare the digital data signal with at least one predefined pattern and to provide a digital output signal. The distributed sensor can be arranged to generate an analog sensor signal which is converted to the digital data signal. The digital data signal can be provided at the digital data output of the distributed sensor. The comparator unit can comprise a comparator input which is configured to receive the digital data signal. The comparator unit can further comprise a comparator output which is configured to provide the digital output signal. The comparator unit can be configured to process the digital data signal.

The predefined pattern can be defined and it can be provided to the evaluation unit. The predefined pattern can for example have a predefined shape, a length in time or distance, or a predefined amplitude. It is further possible that the predefined pattern has a given minimal amplitude. This means, the value of the amplitude of the predefined pattern is at least the minimum amplitude. The predefined pattern can be adapted according to a pattern which is expected to be detected by the distributed sensor.

That the comparator is configured to compare the digital data signal with at least one predefined pattern can mean that the comparator can be configured to detect if at least one predefined pattern is present in the digital data signal. If at least one predefined pattern is present in the digital data signal, the digital output signal comprises the predefined pattern of the digital data signal. If no predefined pattern is present in the digital data signal, it is possible that the digital output signal comprises no data or data which provides the information that no predefined pattern is present in the digital data signal.

The digital data signal comprises position information. As the distributed sensor has a sensor length an analog data signal can be detected by the distributed sensor along the sensor length. The analog data signal can be converted into the digital data signal. Therefore, the digital data signal comprises information about different positions along the sensor length. That the digital data signal comprises position information can for example mean that the analog data signal is detected by the distributed sensor for a plurality of positions along the sensor. The analog data signal can for example comprise amplitude values that are detected by the distributed sensor. That the digital data signal comprises position information can therefore mean that each amplitude value of the analog data signal can be related to a position along the sensor length. The comparator can for example compare the amplitude values of the digital data signal with the predefined pattern.

The digital output signal depends on the predefined pattern and on the digital data signal. This can mean that the digital output signal provides information about the predefined pattern in the digital data signal. It can further mean that the digital output signal does not provide information about patterns in the digital data signal which are different from the predefined pattern. The digital output signal can be different from the digital data signal. It is further possible that the digital output signal comprises only a range of amplitude values of the digital data signal but not all amplitude values of the digital data signal. The digital output signal can comprise the amplitude values of the digital data signal which correspond to the predefined pattern. Thus, the digital output signal can comprise less amplitude values than the digital data signal.

The comparator can be configured to compare the digital data signal with at least two predefined patterns. This means, at least two predefined patterns can be defined and provided to the evaluation unit. The at least two predefined patterns can for example differ in amplitude or in the length in time or distance.

The evaluation can be employed to evaluate the digital data signal provided by the distributed sensor. As the distributed sensor can have a length of several kilometers or several hundreds of kilometers the amount of data provided by the digital data signal can be very large. Furthermore, the digital data signal can be provided to the evaluation unit at a given rate or frequency. Consequently, for a long sensor length and a high frequency the amount of data provided by the digital data signal can be too large to provide the digital data signal instantaneously for example to a tracking unit. A similar problem occurs when sampling at high sampling rates in order to achieve a high resolution, because this also results in large volume of the digital data signal. The tracking unit can be configured to further evaluate and process the digital data signal. The bandwidth of the connection between the evaluation unit and the tracking unit can be limited such that only a given amount of data can be transferred during a given period of time. Thus, if the amount of data of the digital data signal exceeds the bandwidth of the connection between the evaluation unit and the tracking unit, the data cannot be transferred instantaneously.

If the tracking unit is not required to be provided with the complete digital data signal which is provided by the distributed sensor, the evaluation unit can advantageously be arranged to provide the digital output signal comprising the data which is required by the tracking unit. For example, the tracking unit can require only the predefined pattern in the digital data signal. The amount of data of the predefined pattern in the digital data signal can be smaller than the total amount of data of the digital data signal. As the digital output signal depends on the predefined pattern in the digital data signal and on the digital data signal, the amount of data of the digital output signal can be smaller than the total amount of data of the digital data signal. Consequently, a smaller amount of data is required to be provided to the tracking unit than for the case that the complete digital data signal is provided to the tracking unit. As the bandwidth of the connection between the evaluation unit and the tracking unit might be limited, it is advantageous to provide only the data to the tracking unit which is required. In this way, also for a long sensor length and high frequencies data required by the tracking unit can be provided to the tracking unit instantaneously and efficiently.

In at least one embodiment of the evaluation unit the distributed sensor is a distributed acoustic sensor. This means, the distributed acoustic sensor can be arranged to detect sound waves in the vicinity of the distributed acoustic sensor. The sound waves can for example be caused by moving objects, as trains or vehicles, moving persons or animals, or other mechanical vibrations in the vicinity of the distributed acoustic sensor.

In at least one embodiment of the evaluation unit the distributed sensor comprises an optical fibre. The optical fibre can be arranged along or close to a facility which is to be monitored. A facility to be monitored can for example be a railway track, a pipeline or a fence. The distributed sensor can be a distributed acoustic sensor comprising the optical fibre. The distributed sensor can further comprise a light source, for example a laser, where light pulses are sent into the optical fibre. A small part of the light is reflected back to the light source since the light is scattered at scatter sites, as for example impurities in the optical fibre which can be natural or artificial. Changes in the backscattered signal are related to physical changes in the optical fibre which can be caused by noise, structure-borne noise, vibrations or soundwaves along the optical fibre. As the optical fibre can be arranged along a facility which is to be monitored, the distributed sensor is capable of detecting noise along the facility. By evaluating the backscattered signal, the location of the noise along the optical fibre can be determined. With this, vibrations and noise on and around the facility to be monitored can be monitored in real time.

In at least one embodiment of the evaluation unit the optical fibre is arranged along a railway track such that the distributed sensor is capable of detecting the position of noise along the railway track. The optical fibre can be arranged in close proximity to the railway track. The noise along the railway track can be caused, for example, by a moving rail vehicle, people, construction work, animals or environmental events such as rock falls and landslides. From the backscattered signal the position of the noise along the distributed sensor can be determined. In this way, the position of a rail vehicle moving on the railway track can be determined. For the traffic of rail vehicles on the railway track it is advantageous to know the position of each rail vehicle moving on the railway track. It is furthermore advantageous to detect other noise around and on the railway track, as for example humans or animals moving on the railway track.

The predefined pattern can be adapted according to a pattern in the digital data signal which is expected. This means, the predefined pattern can for example be adapted according to a pattern in the digital data signal which is caused by a rail vehicle. Consequently, other patterns in the digital data signal which are caused by other noise than noise from a rail vehicle can be different from the predefined pattern. This means, it is possible that these other patterns in the digital data signal are not provided to the tracking unit by the evaluation unit.

In at least one embodiment of the evaluation unit the digital data signal is a backscattered signal of an input signal which is provided to the optical fibre and the digital data signal comprises an array of amplitude values where each amplitude value relates to one position along the distributed sensor. The input signal can be a pulse of a light source, for example a laser pulse. The pulse of the light source is backscattered in the optical fibre and is detected as an analog signal. The analog backscattered signal is converted into the digital data signal. Therefore, the digital data signal is a backscattered signal of the input signal. The analog backscattered signal can comprise amplitude values for a plurality of positions along the optical fibre. The amplitude values can for example be larger at positions where noise is present in the vicinity of the optical fibre than at positions where no noise is present. The amplitude values relate to the amplitude of the backscattered signal. Therefore, the digital data signal comprises an array of amplitude values. The digital data signal comprises the amplitude values detected by the distributed sensor. As the amplitude values are provided to the evaluation unit, the amplitude values can be compared to the predefined pattern. In this way it can for example be determined if a rail vehicle is present on the railway track on which the distributed sensor is arranged and where the rail vehicle is positioned.

In at least one embodiment of the evaluation unit the digital data signal comprises amplitude values for positions along a fibre length of the optical fibre and the digital output signal comprises amplitude values for positions along an event length which is shorter than the fibre length. This can mean, that the digital data signal comprises the amplitude values detected by the distributed sensor for the total fibre length of the optical fibre. The digital data signal can comprise all amplitude values detected by the distributed sensor. The digital output signal can comprise amplitude values detected by the distributed sensor for the event length. As the event length is shorter than the fibre length, the digital output signal comprises less amplitude values than the digital data signal. This means, the digital output signal does not comprise all amplitude values detected by the distributed sensor. In this way, advantageously the amount of data to be provided from the evaluation unit to the tracking unit is reduced in comparison to the amount of data provided from the distributed sensor to the evaluation unit. Thus, for a limited bandwidth of the connection between the evaluation unit and the tracking unit, the digital output signal can be provided to the tracking unit instantaneously and efficiently.

In at least one embodiment of the evaluation unit the event length corresponds to the length of an event segment of the optical fibre, where along the event segment one predefined pattern in the digital data signal is detected. The event length corresponds to a length along the distributed sensor. If for example a rail vehicle moves along the distributed sensor the rail vehicle extends over a given length of the distributed sensor. In this case the event length can correspond to the length of the rail vehicle and the rail vehicle is arranged within the event segment. The amplitude values which correspond to the position of the event segment have the shape of the predefined pattern. It is further possible that another source of noise is arranged within another event segment such that the amplitude values which correspond to the position of the event segment have the shape of the predefined pattern.

The digital output signal can further comprise amplitude values for positions within a predefined distance from the event segment. This means, the digital output signal does not only comprise the amplitude values which relate to the predefined pattern but also amplitude values from the vicinity of the predefined pattern. In this way, the amplitude values which relate to the predefined pattern can be compared to amplitude values from the vicinity of the predefined pattern by the tracking unit. Thus, events that relate to a predefined pattern in the digital data signal can be recognized by the tracking unit with an improved precision.

In at least one embodiment of the evaluation unit the predefined pattern of the digital output signal relates to the presence of a rail vehicle. If a rail vehicle moves along the distributed sensor the amplitude of the backscattered signal can be increased for the position of the vehicle. The predefined pattern can be defined in such a way that the predefined pattern is recognized in the digital data signal for the position of the rail vehicle. In this way, the position of the rail vehicle along the railway track can be determined.

In at least one embodiment of the evaluation unit the predefined pattern comprises a threshold amplitude. This can mean, that the predefined pattern is recognized in the digital data signal if the digital data signal exceeds the threshold amplitude. The digital data signal can for example exceed the threshold amplitude for the position which relates to the position of a rail vehicle. In this case the comparator can recognize the predefined pattern in the digital data signal and the predefined pattern relates to the presence of the rail vehicle.

In at least one embodiment of the evaluation unit the amount of data comprised by the digital output signal is smaller than the amount of data comprised by the digital data signal. The digital data signal comprises all amplitude values detected by the distributed sensor. The digital output signal can comprise only the amplitude values which relate to the predefined pattern. If for example one rail vehicle is arranged on the railway track along which the distributed sensor is arranged, an event length is shorter than the sensor length. As in this case the predefined pattern corresponds to the presence of the rail vehicle, the digital output signal only comprises the amplitude values which are detected at the position of the rail vehicle. The length of the rail vehicle can be shorter than the length of the distributed sensor and thus the amount of data comprised by the digital output signal is smaller than the amount of data comprised by the digital data signal. In this way, the digital output signal can be provided to the tracking unit instantaneously and efficiently.

In at least one embodiment of the evaluation unit the connection between the digital data output and the evaluation unit comprises a wire or is wireless. The digital data output of the distributed sensor can be connected to the comparator input via a cable. It is further possible that the connection between the digital data output of the distributed sensor and the comparator input is wireless. The connection between the digital data output and the evaluation unit can be via a network or via a fibre link.

Furthermore, a tracking system for tracking rail vehicles is provided. In at least one embodiment of the tracking system, the tracking system comprises the evaluation unit and the distributed sensor connected thereto. All features disclosed for the evaluation unit are also disclosed for the tracking system and vice versa.

In at least one embodiment of the tracking system, the tracking system further comprises a tracking unit which is connected to the evaluation unit and which is configured to determine the position of a rail vehicle along the distributed sensor from the digital output signal. The tracking unit can be configured to receive the digital output signal from the evaluation unit. As the digital output signal can comprise amplitude values for different positions along the distributed sensor, the tracking unit is configured to determine the position of a rail vehicle. In this case the distributed sensor is arranged along a railway track. The tracking unit can further be configured to determine the position of other noise along the distributed sensor from the digital output signal. Since the amount of data of the digital output signal can be smaller than the amount of data of the digital data signal, the digital output signal can be provided by the evaluation unit to the tracking unit in an efficient way.

In at least one embodiment of the tracking system, the digital output signal is compressed before being provided to the tracking unit. The digital output signal can be compressed lossy or lossless. As the bandwidth of the connection between the evaluation unit the tracking unit might be limited, it is advantageous to reduce the amount of data of the digital output signal in order to allow to provide the digital output signal instantaneously and efficiently to the tracking unit. It is further possible that the digital output signal is encrypted before being provided to the tracking unit.

Furthermore, a method for evaluating a digital signal is provided. The evaluation unit and the tracking unit can preferably be employed in the methods described herein. This means all features disclosed for the evaluation unit and the tracking system are also disclosed for the method for evaluating a digital signal and vice-versa.

According to at least one embodiment of the method for evaluating a digital signal, the method comprises the step of supplying a distributed sensor comprising an optical fibre with an input signal. The input signal can be a pulse from a light source, for example a laser pulse.

The method further comprises the step of detecting of an analog backscattered signal by the distributed sensor. The input signal can be backscattered in the optical fibre.

The method further comprises the step of converting the analog backscattered signal into a digital data signal. The distributed sensor can comprise an analog-to-digital converter which is configured to convert the analog backscattered signal into the digital data signal.

The method further comprises the step of providing the digital data signal to an evaluation unit.

The method further comprises the step of determining whether at least one predefined pattern is present in the digital data signal by a comparator unit of the evaluation unit. The comparator unit can be configured to receive the digital data signal. The comparator unit can be configured to compare the digital data signal with the predefined pattern. For example, the comparator unit can compare the amplitude values of the digital data signal to the predefined pattern.

The method further comprises the step of providing a digital output signal by the evaluation unit.

The digital data signal comprises position information and the digital output signal depends on the predefined pattern and on the digital data signal. This can mean, that the digital output signal comprises the amplitude values of the digital data signal which relate to the predefined pattern. If no predefined pattern is present in the digital data signal, the digital output signal can comprise no data or a limited amount of data.

Since the amount of data of the digital output signal can be smaller than the amount of data of the digital data signal, the digital output signal can be provided by the evaluation unit to the tracking unit in an efficient way.

According to at least one embodiment of the method the digital output signal is provided to a tracking unit which is configured to determine the position of a rail vehicle along the distributed sensor from the digital output signal.

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures.

In figure 1 an exemplary embodiment of a tracking system with an evaluation unit shown.

In figure 2 a section of a distributed sensor is shown.

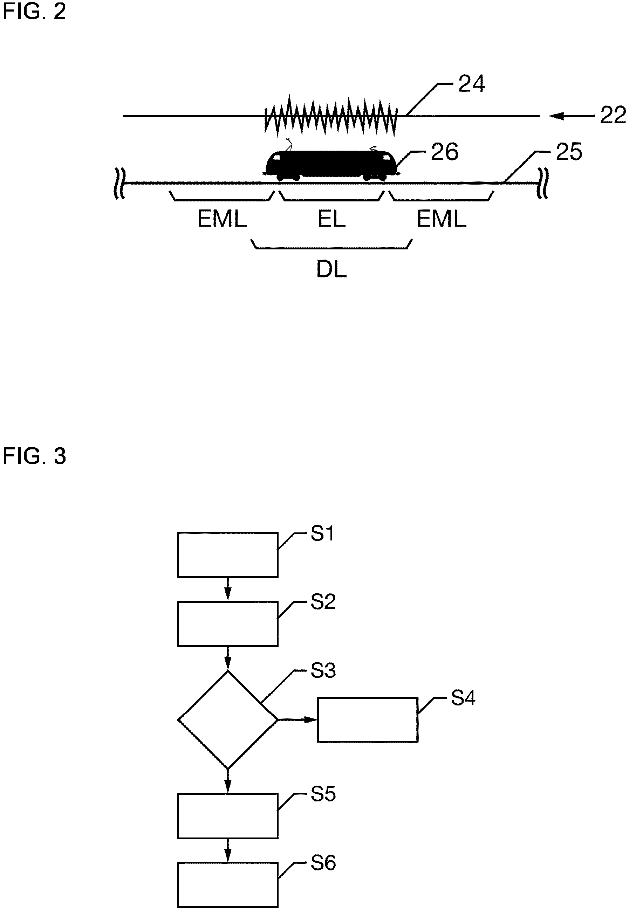

With figure 3 an exemplary embodiment of the method for evaluating a digital signal is described.

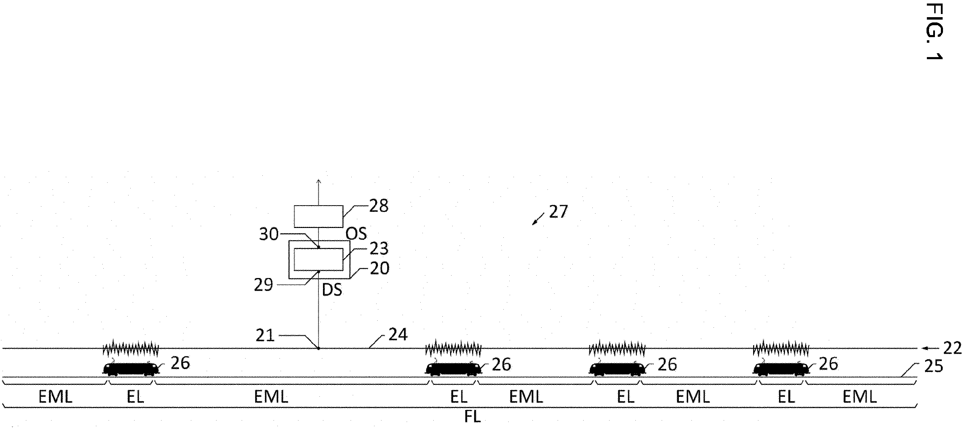

In figure 1 an exemplary embodiment of a tracking system 27 for tracking rail vehicles 26 comprising an evaluation unit 20 for the evaluation of digital signals is shown. The tracking system 27 further comprises a distributed sensor 22 for position sensing. The distributed sensor 22 is arranged along a railway track 25. The distributed sensor 22 comprises an optical fibre 24 which is arranged along the railway track 25. This means, the distributed sensor 22 is a distributed acoustic sensor. The optical fibre 24 is arranged parallel to the railway track 25. The optical fibre 24 has a fibre length FL. The distributed sensor 22 comprises a light source which is not shown and which is configured to provide an input signal which is a pulse of light, for example a laser pulse, to the optical fibre 24. The backscattered light which is scattered in the optical fibre 24 is detected by the distributed sensor 22. This means, the distributed sensor 22 detects an analog backscattered signal which relates to the backscattered light. The analog backscattered signal is converted into a digital data signal DS by an analog-to-digital converter of the distributed sensor 22. The digital data signal DS is provided at a digital data output 21 of the distributed sensor 22.

As an example four rail vehicles 26 are arranged on the railway track 25. This means, the distributed sensor 22 can have a length of several kilometers or several hundreds of kilometers. Along the optical fibre 24 the amplitude of the analog backscattered signal is plotted schematically. The analog backscattered signal can comprise a plurality of amplitude values, where each amplitude value corresponds to one position along the optical fibre 24. The amplitude of the analog backscattered signal can be influenced by physical changes of the optical fibre 24. These physical changes can for example be caused by noise or soundwaves in the vicinity of the optical fibre 24. Therefore, the amplitude of the analog backscattered signal is increased in the vicinity of the rail vehicles 26. Between the rail vehicles 26 no other soundwaves disturb the analog backscattered signal and therefore the amplitude is low. This means, along an event length EL the amplitude of the analog backscattered signal is increased due to the presence of a rail vehicle 26. The rail vehicle 26 is arranged within an event segment of the distributed sensor 22 where the event segment has the event length EL. Between two rail vehicles 26 the amplitude of the analog backscattered signal is low along an empty length EML. The empty length EML corresponds to the distance between two rail vehicles 26. As for safety reasons two rail vehicles 26 usually do not move very close to each other the event length EL is shorter than the empty length EML.

From the analog backscattered signal the position of noise along the railway track 25 can be determined. Therefore, the positions of the rail vehicles 26 along the railway track 25 can be determined.

The evaluation unit 20 comprises a connection to the digital data output 21 of the distributed sensor 22. The connection between the evaluation unit 20 and the digital data output 21 can be via a wire or wireless. A comparator unit 23 of the evaluation unit 20 is configured to receive the digital data signal DS from the distributed sensor 22. As the analog backscattered signal comprises a plurality of amplitude values, the digital data signal DS comprises an array of amplitude values where each amplitude value relates to one position along the distributed sensor 22. This means, the digital data signal DS comprises position information.

The comparator unit 23 comprises a comparator input 29 which is connected to the digital data output 21. The comparator unit 23 further comprises a comparator output 30 which is configured to provide a digital output signal OS and which is connected to a tracking unit 28 of the tracking system 27.

The digital output signal OS depends on a predefined pattern and on the digital data signal DS. The predefined pattern is defined in such a way that it relates to the presence of a rail vehicle 26. This means, the comparator unit 23 compares the digital data signal DS with the predefined pattern. If one or more predefined patterns are recognized in the digital data signal DS, the digital output signal OS comprises the amplitude values of the digital data signal DS which relate to the predefined pattern. If a rail vehicle 26 is present in an event segment of the distributed sensor 22 the predefined pattern is detected in the digital data signal DS for the position of the rail vehicle 26. The predefined pattern can for example relate to a threshold amplitude in the digital data signal DS.

The digital data signal DS comprises amplitude values for positions along the whole fibre length FL and the digital output signal OS only comprises amplitude values for positions along the event length EL. As the event length EL is shorter than the fibre length FL, the amount of data comprised by the digital output signal OS is smaller than the amount of data comprised by the digital data signal DS. Advantageously, the digital output signal OS does not comprise the amplitude values which relate to the empty lengths EML as these amplitude values do not provide information about the presence of a rail vehicle 26. For tracking rail vehicles 26 it is only required to be provided with the amplitude values of the digital data signal DS which relate to the presence of a rail vehicle 26.

The digital output signal OS is provided to the tracking unit 28 by the evaluation unit 20. Before being provided to the tracking unit 28 the digital output signal OS can be compressed. The tracking unit 28 is configured to further process the digital output signal OS and to determine the position of a rail vehicle 26 along the distributed sensor 22 from the digital output signal OS.

As the amount of data comprised by the digital output signal OS is smaller than the amount of data comprised by the digital data signal DS all information required by the tracking unit 28 for determining the position of a rail vehicle 26 along the railway track 25 can be provided to the tracking unit 28 instantaneously, also for a limited bandwidth of the connection between the evaluation unit 20 and the tracking unit 28.

In figure 2 a section of the distributed sensor 22 is shown. Furthermore, a section of the railway track 25 with one rail vehicle 26 is shown. The rail vehicle 26 is arranged in an event segment with an event length EL. Adjacent to the rail vehicle 26, this means in front of the rail vehicle 26 and behind the rail vehicle 26, empty segments of the railway track 25 are arranged which each have an empty length EML. The amplitude of the analog backscattered signal is schematically plotted on the optical fibre 24 of the distributed sensor 22. In the vicinity of the rail vehicle 26 the amplitude of the analog backscattered signal is increased in comparison to the empty segments. With this figure it is shown that the digital output signal OS can further comprise amplitude values for positions within a predefined distance from the event segment. This means, the digital output signal OS does not only comprise the amplitude values which relate to the predefined pattern, this means to the presence of the rail vehicle 26, but also amplitude values from the vicinity of the rail vehicle 26. In figure 2 it is shown that the digital output signal OS comprises amplitude values from a detection length DL which is longer than the event length EL. In this way, the amplitude values which relate to the rail vehicle 26 can be compared to amplitude values from the vicinity of the rail vehicle 26 by the tracking unit 28.

With figure 3 an exemplary embodiment of the method for evaluating a digital signal is described. In a first step S1 the distributed sensor 22 is supplied with an input signal which can be a laser pulse. Subsequently the analog backscattered signal is detected by the distributed sensor 22 and the analog backscattered signal is converted into the digital data signal DS. In a next step S2 the digital data signal DS is provided to the evaluation unit 20. In a next step S3 it is determined whether at least one predefined pattern is present in the digital data signal DS by the comparator unit 23 of the evaluation unit 20. If no predefined pattern is present in the digital data signal DS in a next step S4 the digital output signal OS is provided by the evaluation unit 20 and the digital output signal OS comprises no or a limited amount of data. If a predefined pattern is present in the digital data signal DS in a next step S5 the digital output signal OS is provided by the evaluation unit 20 and the digital output signal OS depends on the predefined pattern and on the digital data signal DS. In a next step S6 the digital output signal OS is provided to the tracking unit 28. The tracking unit 28 is configured to determine the position of a rail vehicle 26 along the distributed sensor 22 from the digital output signal OS.

### Reference numerals

- 20:: evaluation unit
- 21:: digital data output
- 22:: distributed sensor
- 23:: comparator unit
- 24:: optical fibre
- 25:: railway track
- 26:: rail vehicle
- 27:: tracking system
- 28:: tracking unit
- 29:: comparator input
- 30:: comparator output
- DL:: detection length
- DS:: digital data signal
- EL:: event length
- EML:: empty length
- FL:: fibre length
- OS:: digital output signal

## Claims

1. Evaluation unit (20) for the evaluation of digital signals, the evaluation unit (20) comprising:
- a connection to a digital data output (21) of a distributed sensor (22) for position sensing, and
- a comparator unit (23) which is configured to receive a digital data signal (DS) provided by the distributed sensor (22), to compare the digital data signal (DS) with at least one predefined pattern and to provide a digital output signal (OS), wherein
- the digital data signal (DS) comprises position information, and
- the digital output signal (OS) depends on the predefined pattern and on the digital data signal (DS).

2. Evaluation unit (20) according to claim 1, wherein the distributed sensor (22) is a distributed acoustic sensor.

3. Evaluation unit (20) according to one of the preceding claims, wherein the distributed sensor (22) comprises an optical fibre (24).

4. Evaluation unit (20) according to claim 3, wherein the optical fibre (24) is arranged along a railway track (25) such that the distributed sensor (22) is capable of detecting the position of noise along the railway track (25).

5. Evaluation unit (20) according to one of the claims 3 or 4, wherein the digital data signal (DS) is a backscattered signal of an input signal which is provided to the optical fibre (24) and the digital data signal (DS) comprises an array of amplitude values where each amplitude value relates to one position along the distributed sensor (22).

6. Evaluation unit (20) according to claim 5, wherein the digital data signal (DS) comprises amplitude values for positions along a fibre length (FL) of the optical fibre (24) and the digital output signal (OS) comprises amplitude values for positions along an event length (EL) which is shorter than the fibre length (FL).

7. Evaluation unit (20) according to claim 6, wherein the event length (EL) corresponds to the length of an event segment of the optical fibre (24), where along the event segment one predefined pattern in the digital data signal (DS) is detected.

8. Evaluation unit (20) according to one of the preceding claims, wherein the predefined pattern of the digital output signal (OS) relates to the presence of a rail vehicle (26).

9. Evaluation unit (20) according to one of the preceding claims, wherein the predefined pattern comprises a threshold amplitude.

10. Evaluation unit (20) according to one of the preceding claims, wherein the amount of data comprised by the digital output signal (OS) is smaller than the amount of data comprised by the digital data signal (DS).

11. Evaluation unit (20) according to one of the preceding claims, wherein the connection between the digital data output (21) and the evaluation unit (20) comprises a wire or is wireless.

12. Tracking system (27) for tracking rail vehicles (26) comprising the evaluation unit (20) according to one of the preceding claims and the distributed sensor (22) connected thereto.

13. Tracking system (27) according to claim 12, wherein the tracking system (27) further comprises a tracking unit (28) which is connected to the evaluation unit (20) and which is configured to determine the position of a rail vehicle (26) along the distributed sensor (22) from the digital output signal (OS).

14. Tracking system (27) according to claim 13, wherein the digital output signal (OS) is compressed and/or encrypted before being provided to the tracking unit (28).

15. Method for evaluating a digital signal, the method comprising the steps of:
- supplying a distributed sensor (22) comprising an optical fibre (24) with an input signal,
- detecting of an analog backscattered signal by the distributed sensor (22),
- converting the analog backscattered signal into a digital data signal (DS),
- providing the digital data signal (DS) to an evaluation unit (20),
- determining whether at least one predefined pattern is present in the digital data signal (DS) by a comparator unit (23) of the evaluation unit (20), and
- providing a digital output signal (OS) by the evaluation unit (20), wherein
- the digital data signal (DS) comprises position information, and
- the digital output signal (OS) depends on the predefined pattern and on the digital data signal (DS).

16. Method for evaluating a digital signal according to the preceding claim, wherein the digital output signal (OS) is provided to a tracking unit (28) which is configured to determine the position of a rail vehicle (26) along the distributed sensor (22) from the digital output signal (OS).
